# EUROPEAN PATENT APPLICATION

(11) **EP 2 774 716 A2**
(43) Date of publication of application: **10.09.2014**
(21) Application number: 14157365.9
(22) Date of filing: 28.02.2014
(51) Int. Cl.: B23P 15/04, F01D 5/14, F04D 29/32, B64C 11/24

(54) **Method of producing a hollow airfoil**

(30) Priority: 08.03.2013 US 201313790397
(71) Applicant: General Electric Company, Schenectady, New York 12345 (US)
(72) Inventor: Ganesh, Swami, Clifton Park, NY New York 12065 (US)
(74) Representative: Cleary, Fidelma

(57) **Abstract**

A method of producing an airfoil (10) is provided. The method includes forming a steel airfoil preform with a pocket (23) on at least one of the pressure (15) and suction surfaces (16), forming a cover plate (30) for the pocket (23) and welding the cover plate (30) over the pocket (23).

## Description

### BACKGROUND OF THE INVENTION

The subject matter disclosed herein relates to airfoils and, more particularly, to a method of producing a hollow airfoil.

A typical airfoil for a gas, steam or hydraulic turbine is provided with a root dovetail section and a blade/bucket section. The root dovetail section is attachable to a corresponding dovetail slot section on a turbine rotor and the blade/bucket section extends radially outwardly from the root section. The blade/bucket section is thus extendable through a flowpath of a turbine. A working fluid flows along the flowpath and aerodynamically interacts with the rotating blade/bucket section.

In some applications, where the airfoil is required to have significant radial length, the airfoil is made from low density material, such as titanium, in order to reduce the stresses in the airfoil as well as the rotor dovetail. However, the use of such materials leads to high material costs as well as manufacturing challenges. Indeed, for advanced turbines requiring longer than usual airfoil sections, even light weight materials could warrant the need to replace the rotor with much high strength materials that could be very expensive or difficult to manufacture.

### BRIEF DESCRIPTION OF THE INVENTION

According to one aspect of the invention, a method of producing an airfoil is provided. The method includes forming an airfoil preform with a pocket on the pressure surface or the suction surface, forming a cover plate for the pocket and welding the cover plate over the pocket.

According to another aspect of the invention, a method of producing an airfoil is provided and includes forming an airfoil preform with multiple pockets on the pressure surface or the suction surface, forming a cover plate for each of the multiple pockets and welding each of the cover plates over each corresponding pocket. According to another aspect of the invention, an airfoil is provided and includes an airfoil body with a pocket defined on at least one of a pressure surface and a suction surface, a cover plate configured to cover the pocket and a weld joint formed to connect the cover plate to the airfoil body.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is an overall view of an airfoil in accordance with embodiments;
FIG. 2 is a side view of the airfoil of FIG. 1;
FIG. 3 is an enlarged view of the airfoil pockets shown in FIG. 1;
FIG. 4 is a side view of the airfoil pocket shown in FIG. 3;
FIG. 5 is a flow diagram illustrating a method of producing an airfoil such as the airfoil of FIG. 1;
FIGS. 6 and 7 are schematic views of the cover plate configuration representing the alternate embodiments.

The detailed description explains the features, by way of example with reference to the drawings.

### DETAILED DESCRIPTION OF THE INVENTION

As described below, long and partially hollow steel blades/buckets may be produced for gas or steam turbines. Such blades/buckets substantially reduce weight, enable long steel blades instead of the expensive titanium blades, increase turbine efficiency and enable a single- instead of double-flow low pressure (LP) section in steam turbines. These advantages may lead to further cost and material savings from eliminating an extra LP section hood.

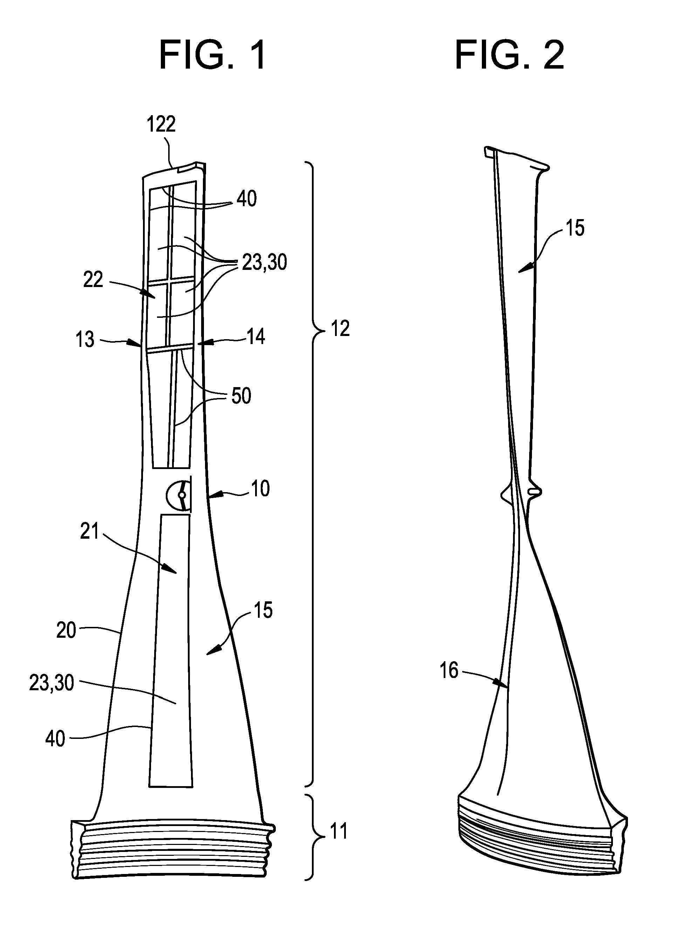

With reference to FIGS. 1-4, an airfoil 10 is provided with a root dovetail section 11 and a blade/bucket section 12. The root section 11 is configured to be attachable to a corresponding dovetail slot on a turbine rotor and the blade/bucket section 12 is configured to extend radially outward from the root section 11 to tip 122. The blade/bucket section thus may be extendable radially to meet the performance requirements in advanced turbines.

The airfoil 10 may be arranged as part of a blade/bucket stage including multiple airfoils attached to the rotor whereby the multiple airfoils rotate with rotation of the rotor. The airfoil 10 includes a leading edge 13, a trailing edge 14, a pressure surface 15 and a suction (convex) surface 16. The leading and trailing edges 13 and 14 are defined in accordance with a predominant flow direction of the working fluid. The pressure and suction surfaces 15 and 16 are disposed oppositely from one another and extend between the lead and trailing edges 13 and 14.

In accordance with embodiments, the airfoil 10 includes an airfoil body 20 formed of metallic alloy. In accordance with further embodiments, the airfoil body 20 may be made of steel and/or other metals, such as titanium, or metallic alloy. The airfoil body 20 has a first, radially inward portion 21 and a second, radially outward portion 22. The first, radially inward portion 21 and the second, radially outward portion 22 may each be formed with at least one or more pockets 23 formed on the pressure surface 15 or the suction surface 16. The airfoil body 20 further includes at least one or more cover plates 30 and at least one or more weld joints 40. Each cover plate 30 is configured to cover a corresponding one of the pockets 23. Each of the weld joints 40 is formed to connect each of the cover plates 30 to the airfoil body 20 at each of the corresponding pockets 23.

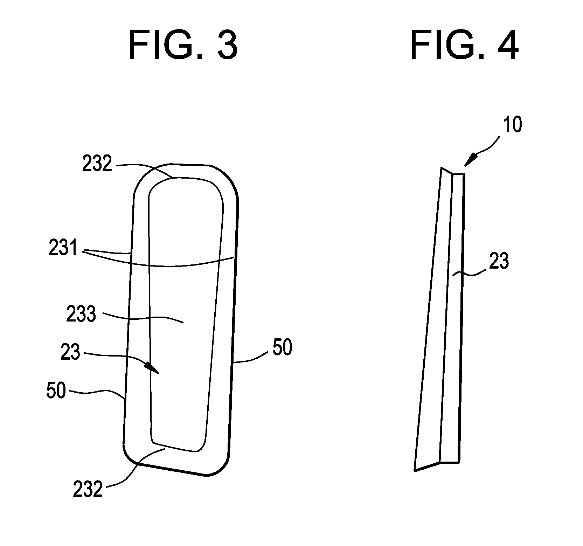

As shown in FIGS. 1 and 3, each of the pockets 23 may be elongated in the radial direction of the airfoil 10. Each of the cover plates 30 should be substantially similar in shape as the corresponding pocket 23 and thus may be similarly elongated in the radial dimension of the airfoil 10. Each of the pockets 23 may have substantially straight, parallel sides 231 and rounded or scalloped end portions 232. It is to be understood that the shapes of the pockets 23 and the cover plates 30 are not limited to the exemplary shaped disclosed herein.

In some cases, as shown in the exemplary illustration of FIG. 1, the multiple pockets 23 and the corresponding cover plates 30 may be arranged as singular features in the first, radially inward portion 21 and in an exemplary 2 X 3 lattice in the second, radially outward portion 22. The airfoil 10 may further include ribs 50 interposed between adjacent pockets 23. The ribs 50 serve to provide structural rigidity and support to the airfoil 10. Such a configuration of the multiple pockets 23 would be advantageous as most of the operational stresses in the airfoil 10 arise as a result of the airfoil 10 weight and, in particular, the weight of the airfoil 10 towards the tip 122. By reducing the weight through the removal of internal mass especially near the tip 122, the multiple pockets 23 enable the use of longer than normal airfoils 10 (i.e., airfoils having radial lengths exceeding about 40") that can be made from inexpensive metallic alloys (i.e., steel) without resorting to the use of more expensive materials (i.e., titanium). Long airfoils would also allow for increases in flow volumes and, therefore, correspondingly increased turbine efficiencies.

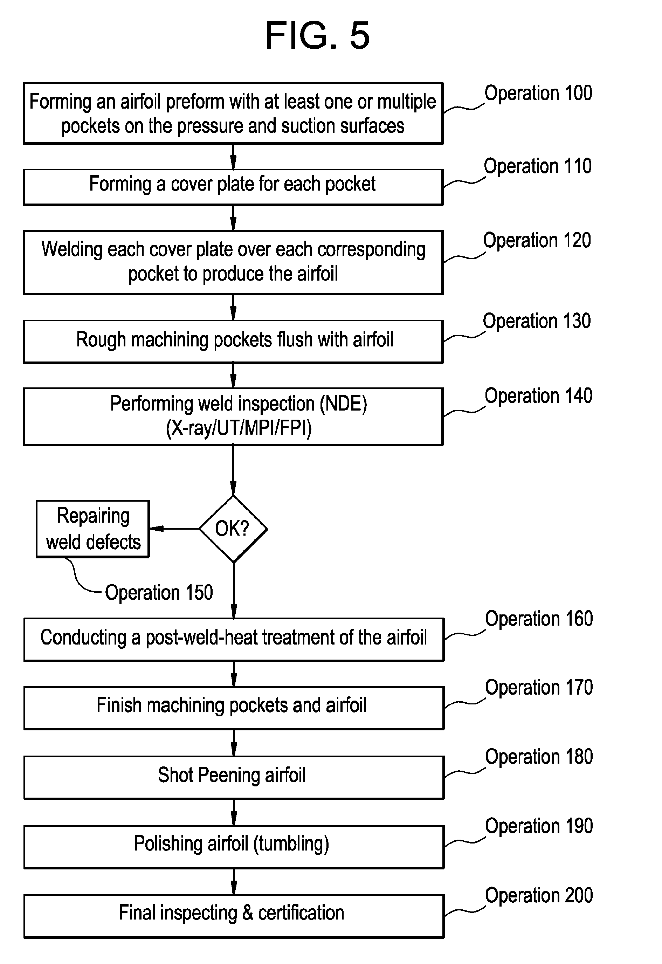

With reference to FIG. 5, a method of producing an airfoil, such as the airfoil 10 of FIG. 1, is provided. The disclosed method addresses several production challenges including achieving a substantially tight fit of preforms and tolerance limits in joint gaps and weld seam paths to meet weld quality requirements and complete joint fusion, achieving high quality welds with reduced weld volume and proper weld bead geometries at the joint top face and root, avoiding weld defects (porosity, undercut, lack of fusion), shrinkage strains, distortions, optimizing post-weld heat treatments to achieve property goals across the joints (tensile strength, ductility, notch toughness, high cycle fatigue (HCF), low cycle fatigue (LCF), fatigue crack growth rate, stress corrosion cracking (SCC) resistance), meeting drawing requirements for key dimensions and avoiding distortion during material removal, heat treatment, finish machining, welding and post-weld heat treatment operations.

The method includes forming an airfoil preform with at least one or multiple pockets on the pressure or the suction surface (operation 100), forming a cover plate for each pocket (operation 110), welding each cover plate over each corresponding pocket to produce the airfoil (operation 120) and rough machining the pocket cover plates and the weld joints to conform to the airfoil shape (operation 130). The method further includes non-destructively evaluating (NDE) the weld joints (operation 140) using one or more techniques that may include, but are not limited to, X-ray radiography, ultrasonic testing, magnetic particle inspection (MPI) and fluid particle inspection (FPI), optionally performing weld repair (operation 150) if unacceptable weld defects are detected in operation 140 and conducting an post-weld heat treatment of the airfoil (operation 160) to achieve desired properties. Finally, the method further includes finish machining the airfoil to meet dimensional and surface finish requirements (operation 170), shot peening of the airfoil to achieve surface integrity on the welded and machined surfaces (operation 180), polishing of the airfoil surface using gentle processes, such as tumbling or drag finishing, to achieve a desired surface finish (operation 190) and final dimensional inspection and certification for conformance to drawings (operation 200).

In accordance with embodiments, the forming of the airfoil preform of operation 100 and the forming of the cover plate of operation 110 may include forming and machining of the airfoil preform and the cover plate with metallic alloys, such as steel or other alloys. For example, the forming of the airfoil preform and the cover plate may include close die forging of the airfoil preform and the cover plate using cast and wrought billet preform followed by annealing and machining of the airfoil preform and the cover plate. Alternatively, the forming of the airfoil preform and the cover plate may include near-net-shape forging of the airfoil preform and the cover plate using either powder metal or ultra fine grained cast and wrought billet followed by machining. The machining operation may be such as to leave an extra envelope on the preforms to allow for post-weld and post heat treat machining operations.

The welding of the cover plate to the airfoil preform at the corresponding pocket of operation 120 may be performed using either laser welding or electron beam welding or other suitable weld processes.

The welding operation may be followed by the rough machining of the weld joint of operation 130 followed by the NDE of operation 140. If these inspections detect unacceptable weld defects, a weld repair of operation 150 may be performed to meet quality requirements. Following inspections, the entire blade may be subject to the post-weld heat treatment of operation 160 to meet property requirements for the weld joint and the base material. Such heat treatment could involve solution annealing treatments typically performed at a high temperature (e.g., 1700 F to 2000 F) followed by hardening or tempering treatments in conditions appropriate for the blade material.

Following the heat treatments, the airfoil may be subject to the finish machining of operation 170 to meet dimensional and surface finish requirements. Optionally, additional NDE inspection could be carried out on the weld joint after the finish machining operation. The airfoil 10 may then be subject to the shot peening of operation 180 to induce compressive stress on the machined surface as well as the weld joint to provide surface integrity. The shot peen requirements (compressive case depth, roughness, distortion) can be set through selection of shot type (glass bead, cast steel, conditioned cut wire), shot size and peen method (e.g. dual peen). Following the shot peening, the blade can be polished in the polishing of operation 190 using processes such as vibratory tumbling in a polishing media to restore surface finish. Subsequently the finished blade/bucket may be inspected for dimensions for certification in operation 200.

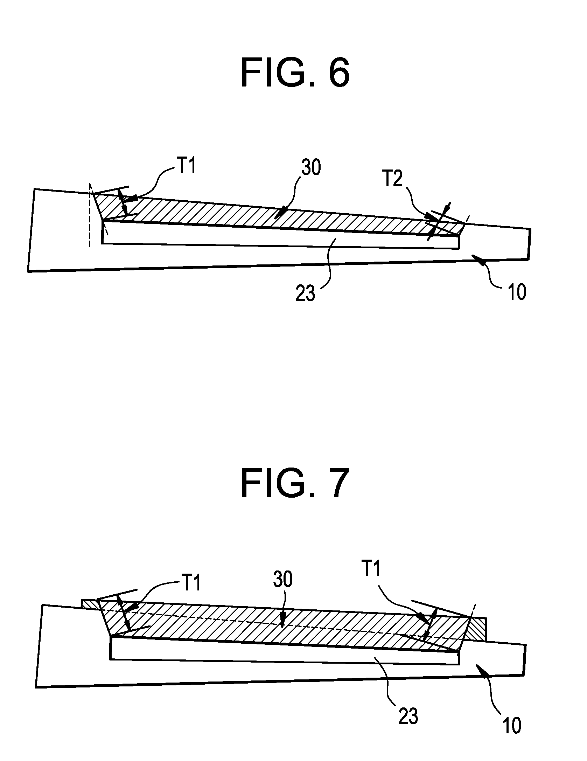

With reference to FIG. 6 and, in accordance with embodiments, the forming of each of the cover plates 30 may include forming each of the cover plates 30 with a variable thickness (i.e., from thickness T1 at one end of the pocket 23 to thickness T2 at the other end of the pocket 23) that comports with a local dimension of the airfoil preform 10. In this case, an outer surface of each cover plate 30 will substantially line up with an outer surface of the airfoil preform 10 when the cover plate 30 is disposed in the pocket 23. The welding process is then performed in accordance with a predefined algorithm set to take into account the variable weld depth required as the variable thickness changes. For example, in the case where the welding includes electron beam welding, it will be understood that the weld depth required where the cover plate 30 has a thickness T1 is greater than a weld depth where the cover plate 30 has a thickness T2.

With reference to FIG. 7 and, in accordance with alternative embodiments, the forming of each of the cover plates 30 may include forming each of the cover plates 30 with a substantially uniform initial thickness (i.e., thickness T1 across the length of the pocket 23) and then assembling a second peripheral piece 32 that may be EDM (electrical discharge machining) cut from the formed preform such that this piece 31 fits flush with cover plate portion 30 to define the weld joint seam and then welding followed by machining each of the cover plates 30 to match a local thickness of the airfoil preform 10. For these embodiments, the welding process can be conducted substantially uniformly about each of the cover plates 30 and does not require that a variable weld depth be programmed into the welding tooling.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A method of producing an airfoil (10), comprising:
forming (100) an airfoil preform with a pocket (23) on at least one of a pressure surface (15) and a suction surface (16);
forming (110) a cover plate (30) for the pocket (23); and
welding (120) the cover plate over the pocket (23).

2. The method according to claim 1, wherein the forming of the airfoil preform comprises forming the airfoil preform using a metallic alloy.

3. The method according to claim 1 or 2, wherein the forming (100) of the airfoil preform comprises forming the airfoil preform with multiple pockets (23) on the pressure surface (15) or the suction surface, and
wherein the forming (110) of the cover plate (30) comprises forming a cover plate (30) for each of the multiple pockets (23).

4. The method according to any of claims 1 to 3, wherein the forming (100) of the airfoil preform comprises conventional forging process using a cast and wrought billet material of selected metal alloy;

5. The method according to any of claims 1 to 3, wherein the forming (100) of the airfoil preform comprises near-net shape closed die forging using at least one or both of powder metal and cast and wrought billet.

6. The method according to any preceding claim, wherein the forming (110) of the cover plate (30) comprises forming the cover plate (30) with a variable thickness that comports with a dimension of the airfoil preform.

7. The method according to any of claims 1 to 5, wherein the forming (110) of the cover plate (30) comprises:
forming the cover plate (30) with a substantially uniform thickness; and
machining the cover plate (30) to match a profile of the airfoil preform.

8. The method according to any preceding claim, wherein the welding (120) comprises at least one of laser welding and electron beam welding.

9. The method according to any preceding claim, further comprising:
inspecting (140) and repairing (150) weld joints; and
conducting a optimized post-weld-heat treatment.

10. The method of any of claims 3 to 9, wherein welding the cover plate (30) over to pocket (23) comprises:
welding each of the cover plates (30) over each corresponding one of the multiple pockets (23).

11. An airfoil (10), comprising:
an airfoil body (20) with a pocket (23) defined on at least one of a pressure surface (15) and a suction surface (16);
a cover plate (30) configured to cover the pocket (23); and
a weld joint (40) formed to connect the cover plate (30) to the airfoil body (20).

12. The airfoil according to claim 11, wherein the airfoil body (20) comprises metallic alloy.

13. The airfoil according to claim 11 or 12, wherein the pocket (23) and the cover plate (30) are elongated in a radial dimension of the airfoil (10).

14. The airfoil according to any of claims 11 to 13, wherein the airfoil body (20) is defined with multiple pockets (23) on the pressure surface (15) and the suction surface (16) and further comprising:
multiple cover plates (30) respectively configured to cover each corresponding one of the multiple pockets (23); and
multiple weld joints (40) formed to connect each of the multiple cover plates (30) to each corresponding one of the multiple pockets (23).

15. The airfoil according to claim 14, wherein the multiple pockets (23) are arranged in a lattice and further comprising ribs (50) interposed between adjacent ones of the multiple pockets (23).
